# EUROPEAN PATENT APPLICATION

(11) **EP 4 197 882 A1**
(43) Date of publication of application: **21.06.2023**
(21) Application number: 21873911.8
(22) Date of filing: 04.06.2021
(51) Int. Cl.: B62B 9/14, B60N 2/28

(54) **NOVEL CHILD SAFETY SEAT CANOPY FIXING STRUCTURE AND CHILD SAFETY SEAT**

(30) Priority: 30.09.2020 CN 202022208350 U
(71) Applicant: Ningbo Baby First Baby Products Co., Ltd., Yuyao, Zhejiang 315412 (CN)
(72) Inventor: ZHOU, Xiaolin, Ningbo, Zhejiang 315412 (CN); YANG, Gang, Ningbo, Zhejiang 315412 (CN)
(74) Representative: Ipside
(86) International application number: PCT/CN2021/098221
(87) International publication number: WO 2022/068249

(57) **Abstract**

A child safety seat canopy fixing structure and a child safety seat. The child safety seat canopy fixing structure comprises a seat back (1) and a canopy assembly (3), the canopy assembly (3) is connected to the seat back (1), the child safety seat canopy fixing structure further comprises canopy guide seats (2), the seat back (1) is provided with special-shaped through holes (11), the canopy guide seats (2) are mounted in the special-shaped through holes (11), and positioning and locking can be achieved by means of the canopy guide seats (2) and the special-shaped through holes (11), and one ends of canopy fixing pins (4) are fixed in the canopy guide seats (2), and the other ends thereof are hingedly connected to the canopy assembly (3). The special-shaped through holes are matched with the canopy guide seats, so that the canopy can be well positioned when being opened, closed and rotated.

## Description

### Technical Field

The present invention relates to a child safety seat, and in particular, to a novel child safety seat canopy fixing structure.

### Background

Child safety seats used in vehicles may provide protection for children and effectively prevent accidents from occurring to children. A child seat has the following advantages. When fierce braking is applied during driving, the child seat can effectively protect a child from collision caused by inertia during the braking, and protect the safety of the child. Because the child seat has a good wrapping performance, if a collision accident occurs to a vehicle, the child seat can effectively support the child's body, especially the head, and protect the head and body from the collision.

In addition to safety protection, child safety seats used in vehicles are usually provided with a retractable canopy to shade children or create comfortable sleeping environment. However, in the prior art, a child safety seat canopy fixing structure has the disadvantages of poor mounting and fixing effects, and the structure being detached with difficulty and with great efforts.

### Summary

The present invention designs a novel child safety seat canopy fixing structure and a child safety seat. The technical problems in the prior art to be solved are the disadvantages of a child safety seat canopy fixing structure having poor mounting and fixing effects and the structure being detached with difficulty and with great efforts.

To solve the above technical problems, the present invention uses the following solution:
a novel child safety seat canopy fixing structure comprises a seat back (1) and a canopy assembly (3), wherein the canopy assembly (3) is connected to the seat back (1), the child safety seat canopy fixing structure further comprises canopy guide seats (2), the seat back (1) is provided with special-shaped through holes (11), and positioning and locking can be achieved by means of the canopy guide seats (2) and the special-shaped through holes (11); and one ends of canopy fixing pins (4) are fixed in the canopy guide seats (2), and the other ends thereof are wingedly connected to the canopy assembly (3).

Preferably, each of the canopy guide seats (2) comprises inverted buckles (21) and a base (23), wherein the base (23) is provided with a passage hole (22), and a plurality of inverted buckles (21) are arranged around the passage hole (22); correspondingly, a same number of positioning ribs (12) are arranged around each of the special-shaped through holes (11), and the inverted buckles (21) match the positioning ribs (12) to achieved positioning and locking of the canopy guide seat (2).

Preferably, the canopy guide seat (2) is further provided with a cover (24), and the cover (24) is configured to fix a fabric sleeve.

Preferably, each of the canopy fixing pins (4) has a length greater than that of the canopy guide seat (2), an outer wall thereof is provided with an elastic buckle (41), the canopy fixing pin (4) is squeezed when entering the passage hole (22) for assembly, and the elastic buckle (41) is restored to its original shape after running through the passage hole (22), so that the canopy fixing pin (4) cannot be easily pulled out during insertion and pulling.

Preferably, the elastic buckle (41) is of a conical structure, with a larger cross-sectional area at one end close to the canopy fixing pin (4), and a smaller cross-sectional area at the other end far away from the canopy fixing pin (4).

Preferably, the elastic buckle (41) is a cone or a truncated cone.

Preferably, the canopy fixing pin (4) is connected to the canopy assembly (3) by means of a rotating connector (31), and the rotating connector (31) is configured such that the canopy fixing pin (4) is not forced to rotate when the canopy assembly (3) is rotated.

Preferably, the canopy assembly (3) is handedly connected to the canopy fixing pin (4) by means of cooperation between a connecting bolt (42) and a pressure spring (43).

A child safety seat comprises a novel child safety seat canopy fixing structure as described above.

The novel child safety seat canopy fixing structure has the following beneficial effects.
(1) According to the present invention, the special-shaped through holes is matched with the canopy guide seats, so that a canopy can be well positioned when being opened, closed and rotated.
(2) According to the present invention, the inverted buckles on each canopy guide seat is matched with the positioning ribs to achieve positioning and locking of the canopy guide seat.
(3) According to the present invention, each of the canopy fixing pins has a length greater than that of the canopy guide seat, and an outer wall of the canopy fixing pin is provided with an elastic buckle, so that the canopy fixing pin cannot be easily pulled out, and thus the canopy assembly will not fall off easily during use.
(4) The present invention is easy to operate, and can be mounted without too much effort.

### Brief Description of the Drawings

FIG. 1 is an exploded view of a novel child safety seat canopy fixing structure according to the present invention;
FIG. 2 is a partially enlarged schematic view of a part A of FIG. 1;
FIG. 3 is a partially enlarged schematic view of a part B of FIG. 1;
FIG. 4 is a schematic diagram of a novel child safety seat canopy fixing structure according to the present invention before assembly;
FIG. 5 is a partially enlarged schematic view of FIG. 4;
FIG. 6 is a schematic diagram of a novel child safety seat canopy fixing structure according to the present invention after assembly;
FIG. 7 is a partially enlarged schematic view of FIG. 6;
FIG. 8 is a schematic structural diagram of positioning ribs according to the present invention.

### List of reference numerals:

1 - Seat back; 11 - Special-shaped through hole; 12 - Positioning rib; 2 - Canopy guide base; 21 - inverted buckle; 22 - Passage hole; 23 - Base; 24 - Cover; 3 - Canopy assembly; 31 - Rotating connector; 4 - Canopy fixing pin; 41 - Elastic buckle; 42 - Connecting bolt; 43 - Pressure spring.

### Detailed Description of the Embodiments

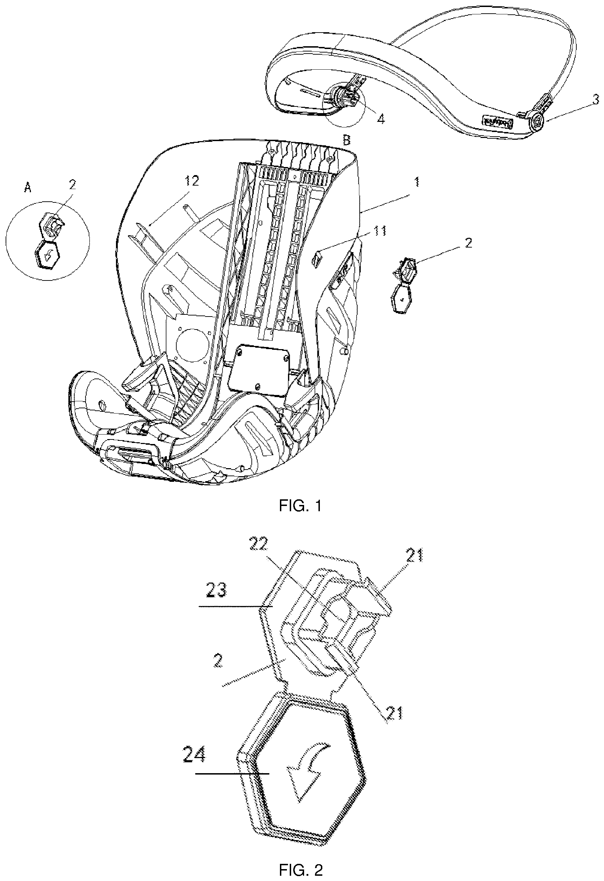

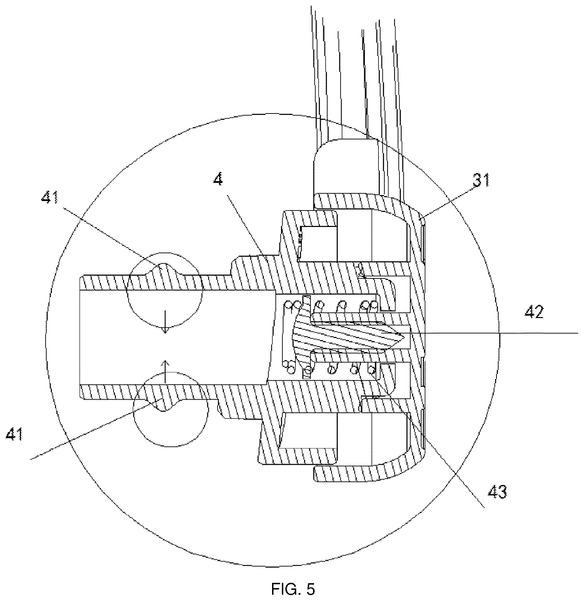

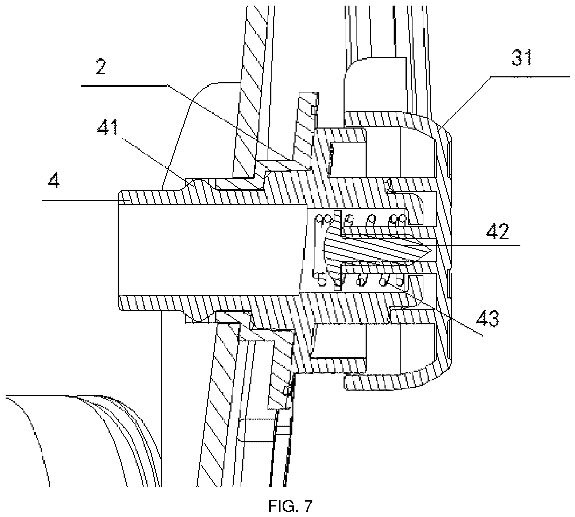

The present invention will be further described below with reference to FIGS. 1 to 8.

As shown in FIG. 1, a novel child safety seat canopy fixing structure comprises a seat back 1 and a canopy assembly 3, wherein the canopy assembly 3 is connected to the seat back 1. The child safety seat canopy fixing structure further comprises canopy guide seats 2, a special-shaped through hole 11 is provided in each side of the seat back 1, the canopy guide seats 2 are mounted in the special-shaped through holes 11, and positioning and locking can be achieved by means of the canopy guide seats and the special-shaped through holes. One ends of canopy fixing pins 4 are fixed in the canopy guide seats 2, and the other ends thereof are hinged connected to the canopy assembly 3. All through holes with shapes other than a circular shape are referred to as special-shaped through holes, such as diamond-shaped through holes, square through holes, and zigzag through holes.

As shown in FIG. 2, each of the canopy guide seats 2 comprises inverted buckles 21 and a base 23, wherein the base 23 is provided with a passage hole 22, and a plurality of inverted buckles 21 are arranged around the passage hole 22. Correspondingly, a same number of positioning ribs 12 are arranged around each of the special-shaped through holes 11, and the inverted buckles 21 match with the positioning ribs 12 to achieve positioning and locking of the canopy guide seat 2. A cross-sectional area of the base 23 is greater than that of the special-shaped through hole 11 to achieve the positioning and locking of the canopy guide seat 2.

The canopy guide seat 2 is further provided with a cover 24, and the cover 24 covers the base and the passage hole when a canopy is in a detached state.

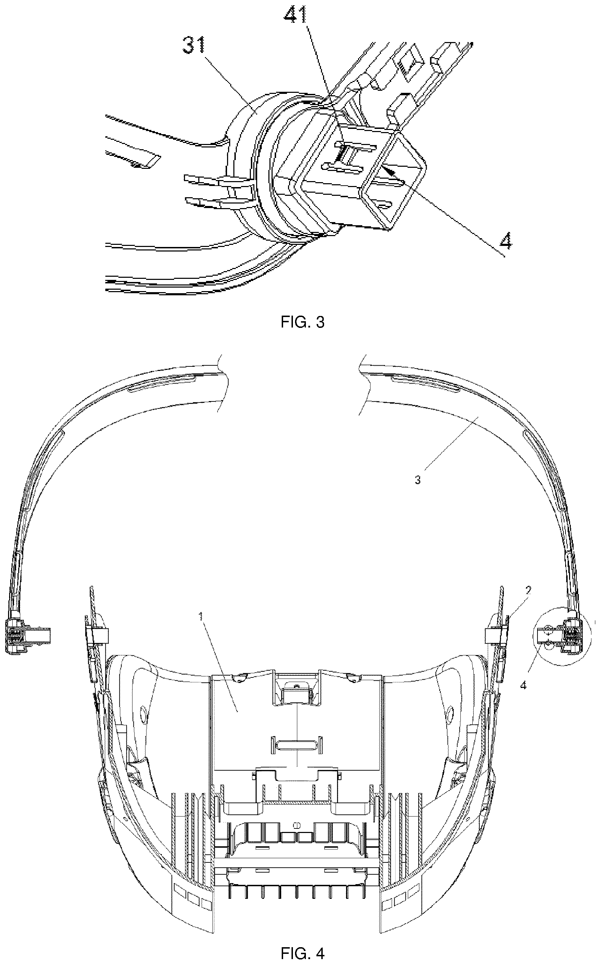

As shown in FIGS. 3-5, each of the canopy fixing pins 4 has a length greater than that of the canopy guide seat 2, an outer wall of the canopy fixing pin is provided with an elastic buckle 41, the canopy fixing pin 4 is squeezed when entering the passage hole 22 for assembly, and the elastic buckle 41 is restored to its original state after running through the passage hole 22, so that the canopy fixing pin 4 cannot be easily pulled out during insertion and pulling.

A specific structure of the elastic buckle 41 is a tapered structure, with a large cross-sectional area at an end close to the canopy fixing pin 4, and a small cross-sectional area at the other end far away from the canopy fixing pin 4. The elastic buckle 41 is a cone or a truncated cone.

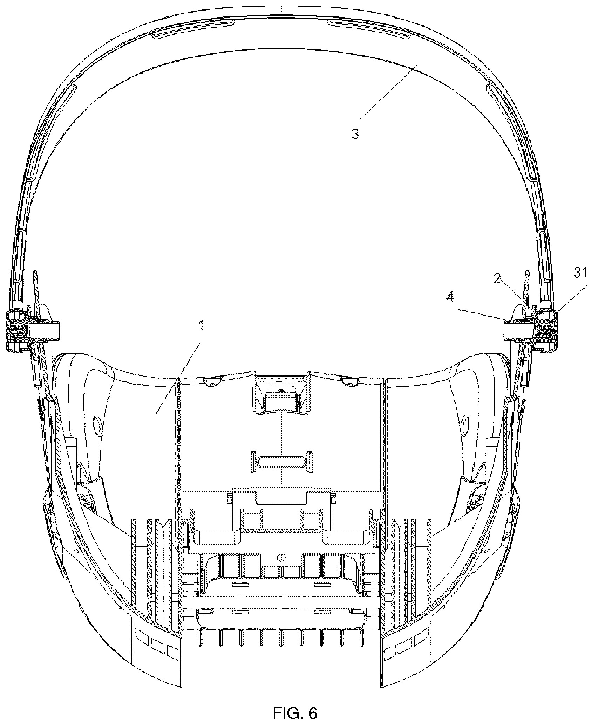

As shown in FIGS. 6-7, the canopy fixing pin 4 is connected to the canopy assembly 3 by means of a rotating connector 31, and the rotating connector 31 is configured such that the canopy fixing pin 4 is not forced to rotate when the canopy assembly 3 is rotated. The canopy assembly 3 is hingedly connected to the canopy fixing pin 4 by means of cooperation between a connecting bolt 42 and a pressure spring 43.

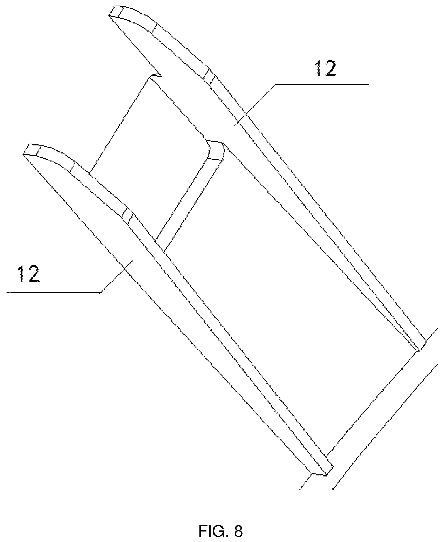

As shown in FIG. 8, two positioning ribs 12 are provided and are arranged in parallel, and each positioning rib 12 corresponds to one of the inverted buckles 21.

As shown in FIGS. 1 to 8, a child safety seat comprises a novel child safety seat canopy fixing structure as described above.

The present invention is exemplarily described above in combination with the accompanying drawings. Obviously, the implementation of the present invention is not limited by the implementation described above. Various improvements made by employing the method concept and the technical solution of the present invention, or the concept and the technical solution of the present invention directly applied to other occasions without improvement all fall within the scope of protection of the present invention.

## Claims

1. A novel child safety seat canopy fixing structure, comprising a seat back (1) and a canopy assembly (3), the canopy assembly (3) being connected to the seat back (1), **characterized in that** the child safety seat canopy fixing structure further comprises canopy guide seats (2), the seat back (1) is provided with special-shaped through holes (11), the canopy guide seats (2) are mounted in the special-shaped through holes (11), and positioning and locking is able to be achieved by means of the canopy guide seats (2) and the special-shaped through holes (11); and one ends of canopy fixing pins (4) are fixed in the canopy guide seats (2), and the other ends thereof are hingedly connected to the canopy assembly (3).

2. The novel child safety seat canopy fixing structure according to claim 1, **characterized in that** each of the canopy guide seats (2) comprises inverted buckles (21) and a base (23), wherein the base (23) is provided with a passage hole (22), and a plurality of inverted buckles (21) are arranged around the passage hole (22); correspondingly, a same number of positioning ribs (12) are arranged around each of the special-shaped through holes (11), and the inverted buckles (21) match the positioning ribs (11) to achieve positioning and locking of the canopy guide seat (2).

3. The novel child safety seat canopy fixing structure according to claim 2, **characterized in that** the canopy guide seat (2) is further provided with a cover (24), and the cover (24) covers the base and the passage hole (22) when a canopy is in a detached state.

4. The novel child safety seat canopy fixing structure according to claim 1, **characterized in that** each of the canopy fixing pins (4) has a length greater than that of the canopy guide seat (2), an outer wall of the canopy fixing pin is provided with an elastic buckle (41), the canopy fixing pin (4) is squeezed when entering the passage hole (22) for assembly, and the elastic buckle (41) is restored to its original shape after running through the passage hole (22), so that the canopy fixing pin (4) is not easily pulled out during insertion and pulling.

5. The novel child safety seat canopy fixing structure according to claim 4, **characterized in that** the elastic buckle (41) is of a tapered structure, with a larger cross-sectional area at one end close to the canopy fixing pin (4), and a smaller cross-sectional area at the other end far away from the canopy fixing pin (4).

6. The novel child safety seat canopy fixing structure according to claim 5, **characterized in that** the elastic buckle (41) is a cone or a truncated cone.

7. The novel child safety seat canopy fixing structure according to any one of claims 4-6, **characterized in that** the canopy fixing pin (4) is connected to the canopy assembly (3) by means of a rotating connector (31), and the rotating connector (31) is configured such that the canopy fixing pin (4) is not forced to rotate when the canopy assembly (3) is rotated.

8. The novel child safety seat canopy fixing structure according to claim 7, **characterized in that** the canopy assembly (3) is hingedly connected to the canopy fixing pin (4) by means of cooperation between a connecting bolt (42) and a pressure spring (43).

9. A child safety seat, **characterized by** comprising a novel child safety seat canopy fixing structure according to any one of claims 1-8.
